# EUROPÄISCHE PATENTSCHRIFT

(11) **EP 3 118 144 B1**
(45) Veröffentlichungstag und Bekanntmachung des Hinweises auf die Patenterteilung: **18.03.2020**
(21) Anmeldenummer: 16178146.3
(22) Anmeldetag: 06.07.2016
(51) Int. Cl.: B65G 49/06, B24B 9/10

(54) **VORRICHTUNG ZUM BEARBEITEN EINER WERKSTÜCKPLATTE MIT EINEM WERKZEUG**
DEVICE FOR TREATING A WORKPIECE PANEL WITH A TOOL
DISPOSITIF D'USINAGE D'UN PORTE-PIECES COMPRENANT UN OUTIL

(30) Priorität: 14.07.2015 AT 506182015
(43) Veröffentlichungstag der Anmeldung: 18.01.2017
(73) Patentinhaber: Schachner, Franz, 3354 Wolfsbach (AT); Gruber, Reinhard, 3354 Wolfsbach (AT)
(72) Erfinder: Schachner, Franz, 3354 Wolfsbach (AT); Gruber, Reinhard, 3354 Wolfsbach (AT)
(74) Vertreter: Hübscher & Partner Patentanwälte GmbH

(56) Entgegenhaltungen:
- EP-A1- 1 413 397
- EP-A1- 1 722 410
- WO-A1-03/076132
- WO-A1-2015/083615
- DE-A1- 3 739 703
- US-A1- 2005 011 229
- US-A1- 2011 061 999
- US-A1- 2013 040 541

## Beschreibung

Die Erfindung bezieht sich auf eine Vorrichtung zum Bearbeiten einer Werkstückplatte, insbesondere einer Glasscheibe, mit einem Werkzeug und mit einer das Werkzeug umschließenden, an eine hydraulische Druckleitung zur Ausbildung eines Hydraulikpolsters zwischen einer Gleitfläche und der Werkstückplatte angeschlossenen Gleitführung für die Werkstückplatte.

Um Werkstückplatten, insbesondere Glasscheiben, die beispielsweise entlang ihrer Ränder mithilfe von Schleif- oder Fräswerkzeugen zu bearbeiten sind, im Bereich des Werkzeugeingriffs bearbeitungsgerecht führen zu können, ohne die Oberfläche der Werkstückplatte zu beschädigen, ist es bekannt (WO 2004/050516 A1), die Werkstückplatte zwischen zwei koaxial zum Werkzeug angeordneten, hohlen Führungsringen zu führen, die der Werkstückplatte zugekehrte, gelochte Gleitflächen aufweisen und mit einer Druckflüssigkeit beaufschlagt werden, sodass sich zwischen den Führungsringen und der Werkstückplatte Hydraulikpolster aufbauen, die eine oberflächenschonende Führung der Werkstückplatte im unmittelbaren Bearbeitungsbereich erlauben. Nachteilig ist allerdings, dass mit der beidseitigen Führung der Werkstückplatte durch Hydraulikpolster der Konstruktionsaufwand vergrößert wird und dass das Werkzeug durch die für den Aufbau der Hydraulikpolster erforderliche Druckflüssigkeit zumindest für hohe Werkzeugleistungen nur ungenügend gekühlt werden kann, weil nur ein Teil der für den Aufbau der Hydraulikpolster eingesetzten Flüssigkeit zum Werkzeug gelangt.

US 20050011229 A1 enthält eine Vorrichtung zum Bearbeiten von Werkstoffplatten, wie Glasscheiben, mit einer Stützeinrichtung für die Werkstoffplatten und mit einem Werkzeug zum Bearbeiten der Werkstoffplatten, wobei die Stützeinrichtung paarweise vorgesehene Stützelemente mit einander zugewandten Stützflächen aufweist, zwischen denen die Werkstoffplatten aufgenommen sind, und in den Stützflächen Öffnungen für unter Druck austretende Flüssigkeit vorgesehen sind. Das Dokument beschreibt weiter, dass es zwischen den Werkstoffplatten und den Stützflächen einen Spalt gibt, beispielsweise 1 mm, so dass eine ausreichend präzise Führung der Werkstoffplatten zwischen den Stützelementen möglich ist.

US 20130040541 A1 betrifft eine Vorrichtung zum Fördern von plattenförmigen Elementen, z.B. Platten, wie (Flach-)Glastafeln.

EP1413397 A1 enthält eine Vorrichtung zum Bearbeiten des Randes eines Gegenstandes wie beispielsweise von Flachglas-produkten, mit einem um eine Achse rotierenden Werkzeug, und mit einer dem Werkzeug zugeordneten Kühleinrichtung für eine Kühlflüssigkeit, insbesondere für Kühlwasser, wobei die Kühleinrichtung einen das Werkzeug umgebenden, umschließenden Kühlkranz aufweist, der an seiner dem Werkzeug zugewandten Innenseite in Umfangsrichtung verteilt Düsenlöcher aufweist, die mit der Rotationsachse des Werkzeuges jeweils einen ersten spitzen Winkel einschließen, wobei das Werkzeug mindestens zwei Werkzeugelement unterschiedlichen Durchmessers aufweist, die in Richtung der Werkzeug-Achse verstellbar vorgesehen sind, und wobei die Düsenlöcher im Kühlkranz in zu den Werkzeugelementen zugeordneten, axial gegeneinander versetzten Reihen von Düsenlöchern vorgesehen sind.

Der Erfindung liegt somit die Aufgabe zugrunde, eine Gleitführung für eine Werkstückplatte, insbesondere für eine Glasscheibe, im Bearbeitungsbereich eines Werkzeugs so auszubilden, dass mit vergleichsweise einfachen konstruktiven Mitteln nicht nur eine oberflächenschonende Führung der Werkstückplatte sichergestellt, sondern auch eine gute Kühlung des Werkzeugs als Voraussetzung für hohe Bearbeitungsleistungen gewährleistet werden kann.

Ausgehend von einer Vorrichtung der eingangs geschilderten Art löst die Erfindung die gestellte Aufgabe dadurch, dass die Gleitfläche von einer an die hydraulische Druckleitung angeschlossenen, radial einwärts gegen das Werkzeug ausgerichteten Ringdüse umschlossen ist.

Die Erfindung geht von der Erkenntnis aus, dass es im Allgemeinen für eine bearbeitungsgerechte, oberflächenschonende Führung ausreicht, die Werkstückplatte lediglich auf einer Seite an einem Hydraulikpolster abzustützen, zumal insbesondere bei Glasscheiben üblicherweise nur eine Seite mit einer durch eine mechanische Führung gefährdeten Oberflächenbeschichtung versehen ist. Wird außerdem sichergestellt, dass die zum Aufbau des Hydraulikpolsters eingesetzte Flüssigkeit nur auf der Werkzeugseite aus dem Spalt zwischen der Gleitführung und der Werkstückplatte austreten kann, so wird die Flüssigkeit unter einem entsprechenden Druck entlang der Werkstückplatte zum Werkzeug strömen und dieses kühlen. Zu diesem Zweck wird die das Werkzeug umgebende Gleitfläche mit einer radial einwärts gegen das Werkzeug ausgerichteten Ringdüse für die Druckflüssigkeit umschlossen, die somit im Spalt zwischen der Gleitfläche und der Werkstückplatte radial einwärts gegen das Werkzeug strömt und aufgrund einer Injektorwirkung Luft von radial außen ansaugt. Die angesaugte Luft verhindert einen Flüssigkeitsaustritt radial nach außen und mischt sich mit der Flüssigkeitsströmung, wodurch sich die Reibungsverhältnisse verbessern lassen.

Bei einer Bearbeitung der Werkstückplatte entlang eines Plattenrandes beschränkt sich die Gleitführung auf einen Umfangsabschnitt der ringförmigen Gleitfläche, die in einem solchen Fall über den Plattenrand vorsteht. In dem nicht durch die Werkstückplatte abgedeckten Umfangsbereich der Gleitfläche kann sich wegen des Fehlens eines entsprechenden Gegendrucks kein Hydraulikpolster aufbauen. Die aus der Ringdüse ausströmende Flüssigkeit wird wegen der gewählten Ausrichtung der Ringdüse unmittelbar gegen das von der Gleitführung umschlossene Werkzeug gesprüht, das somit in jedem Fall über seinen gesamten Umfang mit Flüssigkeit aus der Ringdüse beaufschlagt wird. Der Beaufschlagungsdruck der Ringdüse sowie deren Strömungswiderstand ist so aufeinander abzustimmen, dass trotz einer auf einen Umfangsbereich beschränkten Abdeckung der Ringdüse durch die Werkstückplatte der Aufbau eines Hydraulikpolsters im Bereich des durch die Werkstückplatte abgedeckten Umfangabschnitts der Gleitfläche gewährleistet ist.

Besonders einfache Konstruktionsverhältnisse für die Ringdüse ergeben sich, wenn die Ringdüse zwischen einer die Gleitfläche bildenden Gleitscheibe und einem die Gleitscheibe umfangsseitig umschließenden Formring gebildet wird. In diesem Fall bilden die Gleitscheibe mit ihrem äußeren Umfangsrand und der Formring mit seinem inneren Umfangsrand die einander gegenüberliegenden Strömungswände der Ringdüse, was eine voneinander gesonderte Herstellung dieser Düsenwände erlaubt.

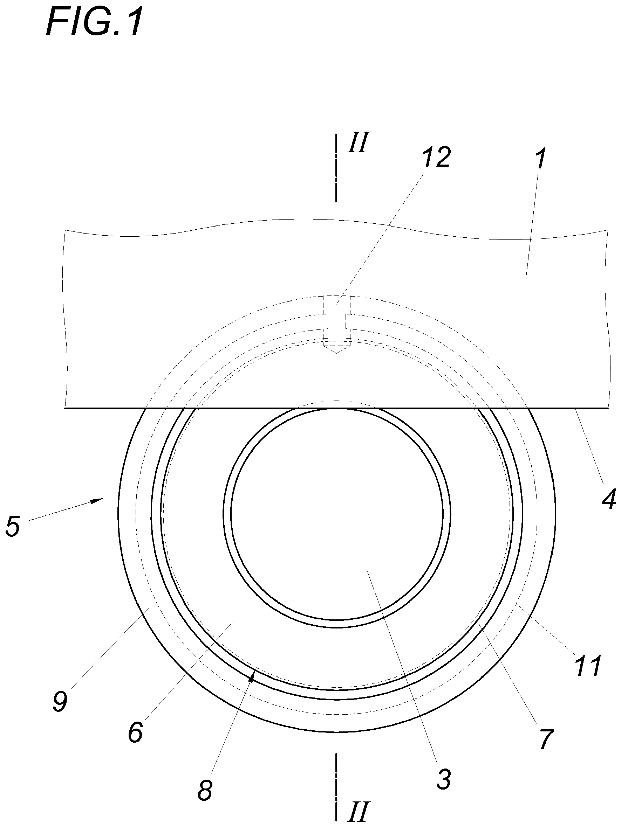

In der Zeichnung ist der Erfindungsgegenstand beispielsweise dargestellt. Es zeigen
- Fig. 1: eine erfindungsgemäße Vorrichtung zum Bearbeiten einer Werkstückplatte in einer Vorderansicht und

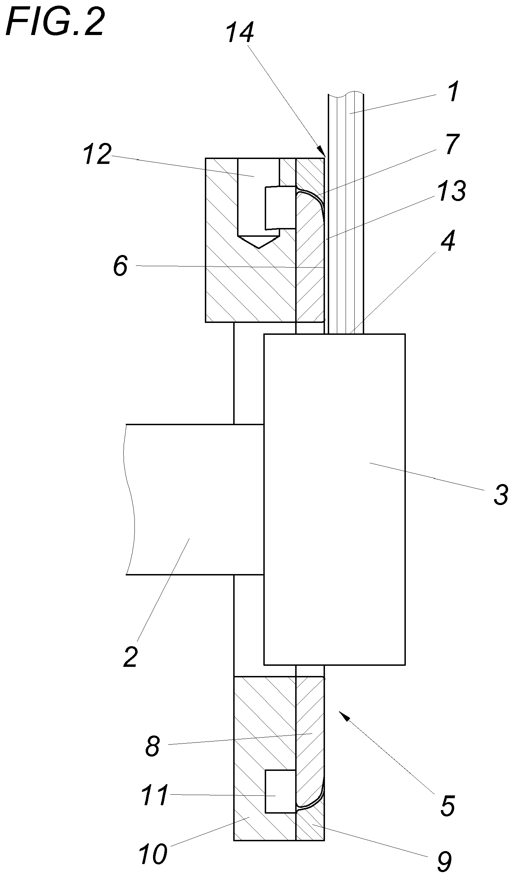

- Fig. 2: diese Vorrichtung in einem Schnitt nach der Linie II-II der Fig. 1 in einem größeren Maßstab.

Die dargestellte Vorrichtung zum Bearbeiten einer Werkstückplatte 1, im Ausführungsbeispiel einer Glasscheibe, weist ein auf einer Antriebswelle 2 gelagertes Werkzeug 3 zum Bearbeiten eines Plattenrands 4 beispielsweise durch ein Schleifen oder Fräsen auf. Die Führung der Werkstückplatte 1 in Richtung der Antriebswelle 2 erfolgt über eine Gleitführung 5, die das Werkzeug 3 umschließt und eine Gleitfläche 6 zur Abstützung der Werkstückplatte 1 über einen Hydraulikpolster bildet. Zu diesem Zweck wird die ringförmige Gleitfläche 6 von einer Ringdüse 7 umgeben, die radial einwärts gegen das Werkzeug 3 ausgerichtet ist. Diese Ringdüse 7 ergibt sich durch einen Formspalt zwischen einer die Gleitfläche 6 formenden Gleitscheibe 8 und einem die Gleitscheibe 8 umschließenden Formring 9, der zusammen mit der Gleitscheibe 8 auf einem Tragkörper 10 befestigt ist. Der Tragkörper 10 ist im Bereich der Ringdüse 7 mit einem gegen die Ringdüse 7 offenen Ringkanal 11 versehen, der an eine hydraulische Druckleitung 12 angeschlossen ist, sodass die Ringdüse 7 über die Druckleitung 12 und den Ringkanal 11 unter einem entsprechenden Druck von beispielsweise 15 bis 25 bar mit einer Flüssigkeit, vorzugsweise Wasser, beaufschlagt wird.

Zufolge diese Beaufschlagung der Ringdüse 7 mit Druckflüssigkeit baut sich in dem durch die Werkstückplatte 1 abgedeckten Umfangsbereich der Gleitfläche 6 ein Hydraulikpolster zwischen der Gleitscheibe 8 und der Werkstückplatte 1 auf, über den die Werkstückplatte 1 reibungsarm abgestützt wird, wenn sie gegenüber dem Werkzeug 3 zur Bearbeitung des Plattenrands 4 verlagert wird. Die aus dem durch den Hydraulikpolster bestimmten Spalt 13 zwischen der Gleitscheibe 8 und der Werkstückplatte 1 austretende Flüssigkeit beaufschlagt das Werkzeug 3. Im Umfangsbereich außerhalb der Werkstückplatte 1 wird die Flüssigkeit radial einwärts unmittelbar auf das Werkzeug 3 abgesprüht, das somit über den ganzen Umfang mit Flüssigkeit gekühlt wird.

Die bezüglich des Werkzeugs 3 radial einwärts gerichtete Flüssigkeitsströmung im Spalt 13 zwischen der Gleitscheibe 8 und der Werkstückplatte 1 bedingt im Bereich des Formrings 9 eine Injektorwirkung, durch die über den Spalt 14 zwischen dem Formring 9 und der Werkstückplatte 1 Luft angesaugt wird, die sich mit der Flüssigkeitsströmung aus der Ringdüse 7 vermengt. Durch diese radial von außen angesaugte Luft wird einerseits ein Austreten der Flüssigkeit radial nach außen unterbunden und anderseits das Reibungsverhalten zwischen der Werkstückplatte 1 und dem Hydraulikpolster verbessert.

## Patentansprüche

1. Vorrichtung zum Bearbeiten einer Werkstückplatte (1) mit einem Werkzeug (3) und mit einer das Werkzeug (3) umschließenden, an eine hydraulische Druckleitung (12) zur Ausbildung eines Hydraulikpolsters zwischen einer Gleitfläche (6) und der Werkstückplatte (1) angeschlossenen Gleitführung (5) für die Werkstückplatte (1), **dadurch gekennzeichnet, dass** die Gleitfläche (6) von einer an die hydraulische Druckleitung (12) angeschlossenen, radial einwärts gegen das Werkzeug (3) ausgerichteten Ringdüse (7) umschlossen ist.

2. Vorrichtung nach Anspruch 1, **dadurch gekennzeichnet, dass** die Ringdüse zwischen einer die Gleitfläche (6) bildenden Gleitscheibe (8) und einem die Gleitscheibe (8) umfangsseitig umschließenden Formring (9) gebildet ist.

## Claims

1. Device for machining a workpiece panel (1) with a tool (3) and a sliding guide (5) for the workpiece panel (1), said sliding guide surrounding the tool (3) and being connected to a hydraulic pressure line (12) to form a hydraulic cushion between a sliding surface (6) and the workpiece panel (1), **characterised in that** the sliding surface (6) is surrounded by a ring nozzle (7) which is connected to the hydraulic pressure line (12) and is oriented radially inwards with respect to the tool (3).

2. Device as claimed in claim 1, **characterised in that** the ring nozzle is formed between a sliding disk (8), which forms the sliding surface (6), and a shaped ring (9) which surrounds the sliding disk (8) on the peripheral side.

## Revendications

1. Dispositif d'usinage d'un porte-pièces (1) comprenant un outil (3) et comprenant un rail coulissant (5) annulaire entourant l'outil (3) raccordé à une conduite hydraulique sous pression (12) pour former pour le porte-pièces (1) un coussin hydraulique entre une surface de glissement (6) et le porte-pièces (1), **caractérisé en ce que** la surface de glissement (6) est entourée par une buse annulaire (7) raccordée à la conduite hydraulique sous pression (12) et orientée radialement vers l'intérieur, en direction de l'outil (3).

2. Dispositif selon la revendication 1, **caractérisé en ce que** la buse annulaire est formée entre un disque de glissement (8) constituant la surface de glissement (6) et un anneau de formage (9) entourant le disque de glissement (8) sur sa périphérie.
